# EUROPÄISCHE PATENTSCHRIFT

(11) **EP 2 310 261 B1**
(45) Veröffentlichungstag und Bekanntmachung des Hinweises auf die Patenterteilung: **23.04.2014**
(21) Anmeldenummer: 09781261.4
(22) Anmeldetag: 30.07.2009
(51) Int. Cl.: B64C 1/20, B64C 1/00, B64C 1/06

(54) **RUMPFSEKTION MIT EINEM AUS FASERVERBUNDWERKSTOFF AUSGEBILDETEN INTEGRALEM DRUCKSCHOTT SOWIE RUMPFSCHALE MIT EINER DERARTIGEN RUMPFSEKTION**
FUSELAGE SECTION HAVING AN INTEGRAL PRESSURE BULKHEAD FORMED FROM COMPOSITE FIBRE MATERIAL, AS WELL AS A FUSELAGE SHELL HAVING A FUSELAGE SECTION SUCH AS THIS
SECTION DE FUSELAGE COMPRENANT UNE CLOISON DE PRESSION REALISEE EN MATERIAU RENFORCE PAR DES FIBRES ET COQUE DE FUSELAGE DOTEE D UNE SECTION DE FUSELAGE DE CE TYPE

(30) Priorität: 12.08.2008 DE 102008041173; 12.08.2008 US 188749 P
(43) Veröffentlichungstag der Anmeldung: 20.04.2011
(73) Patentinhaber: Airbus Operations GmbH, 21129 Hamburg (DE)
(72) Erfinder: NOEBEL, Torsten, 25436 Neuendeich (DE); WILLMS, Birgit, 22763 Hamburg (DE)
(74) Vertreter: Isarpatent
(86) Internationale Anmeldenummer: PCT/EP2009/059836
(87) Internationale Veröffentlichungsnummer: WO 2010/018063

(56) Entgegenhaltungen:
- EP-A- 0 387 400
- DE-A1-102006 060 360
- DE-C1- 19 503 939
- GB-A- 562 301

## Beschreibung

Die Erfindung betrifft eine Rumpfschale für ein Flugzeug mit zumindest einer Rumpfsektion für den Druckrumpf eines Flugzeuges mit einer Rumpfschalenstruktur und zumindest einem Druckschott aus einem Faserverbundwerkstoff.

Druckrümpfe für Flugzeuge werden heute typischerweise aus Rumpfsektionen zusammengefügt, wobei Druckschotte den Abschluss der bedruckten Flugzeugzelle bilden. Die Druckschotte werden herkömmlicherweise in Differentialbauweise angefertigt und anschließend in die entsprechende Rumpfsektion eingebaut. Ein Nachteil der differentiellen Bauweise ist die hohe Teilezahl und der dadurch bedingte fertigungstechnische Aufwand bei hohem Strukturgewicht.

Zur Verringerung der Teilezahl ist beispielsweise aus der EP 0 387 400 A2 ein Druckschott für ein Flugzeug mit Druckrumpf bekannt, das einteilig angefertigt ist und eine Kalottenform aufweist, die im Randbereich an den Rumpfquerschnitt angepasst ist. Das einstückig ausgebildete Druckschott wird in die Rumpfsektion eingesetzt, wobei die Befestigung an der Rumpfsektion mit erheblichem fertigungstechnischem Aufwand mittels einer Niet-, Schweiß- oder Klebeverbindung erfolgt. Um eine ausreichende Festigkeit in den Fügebereichen zu gewährleisten, ist ferner eine entsprechend den Strukturbelastungen und Bauteildicken dimensionierte Verbindung erforderlich, so dass derartige Strukturbauteile ein hohes Strukturgewicht aufweisen.

Dokument GB562301, das als nächstliegendes Stand der Technik betrachtet wird, zeigt eine andere bekannte Rumpfschale.

Demgegenüber liegt der Erfindung die Aufgabe zugrunde, eine Rumpfschale mit zumindest einer Rumpfsektion mit Druckschott zu schaffen, die ein minimales Strukturgewicht bei geringem fertigungstechnischem Aufwand ermöglichen.

Diese Aufgabe wird durch eine Rumpfschale gemäß den Merkmalen des Patentanspruchs 1 gelöst.

Die erfindungsgemäße Rumpfsektion für den Druckrumpf eines Flugzeuges weist eine Rumpfschalenstruktur und zumindest ein Druckschott (Druckspant) aus einem Faserverbundwerkstoff auf, wobei das Druckschott einstückig mit der Rumpfschalenstruktur ausgebildet ist. Aufgrund des integral mit der Rumpfsektion ausgebildeten Druckschotts wird eine gewichtsoptimierte Struktur hoher Festigkeit bei wesentlich verringertem fertigungstechnischem Aufwand erreicht. Die Faserverbundwerkstoffstruktur wird vorzugsweise entsprechend dem Lastverlauf der Rumpfsektion- /Druckschotteinheit ausgebildet, so dass eine leichte Struktur hoher Festigkeit ermöglicht ist.

Bei einem besonders bevorzugten Ausführungsbeispiel der Erfindung verläuft der Übergangsbereich von der Rumpfschalenstruktur zu dem Druckschott im Wesentlichen stetig, ohne einen den Faserverlauf störenden, scharfkantigen Knick. Der Übergang von dem Druckschott zu der Rumpfschalenstruktur ist vorzugsweise relativ flache ausgebildet, so dass ungünstige rechte Winkel im Faserverlauf vermieden werden.

Die erfindungsgemäße Rumpfsektion ist bei einer konkreten Ausführungsform mit einem Anschlussbereich für eine heckseitige, hintere Rumpfsektion versehen. Der Anschlussbereich hat vorzugsweise einen verringerten Durchmesser, wobei eine Außenumfangsfläche der Rumpfsektion eine gemeinsame Außenfläche mit einer Umfangsfläche der heckseitig an der Rumpfsektion angeordneten hinteren Rumpfsektion bildet.

Gemäß einem besonders bevorzugten Ausführungsbeispiel der Erfindung hat das Druckschott eine Kalottenform, Ellipsenform oder Ovalform. Vorzugsweise ist das Druckschott mit einer Kalotte versehen, die in Richtung des Rumpfhecks konvex gewölbt ist.

Die Rumpfsektion weist insbesondere einen lastabhängigen Dickenverlauf auf, so dass ein nochmals verringertes Strukturgewicht bei hoher statischer und dynamischer Festigkeit erreicht wird. Hierbei kann eine Hybridbauweise aus unterschiedlichen Materialien oder eine Bauweise aus gleichen Materialien verwendet werden, wobei die Rumpfschalenstruktur eine hohe Steifigkeit aufweist und das Druckschott als dünne, elastische Membran ausgebildet ist. Die Herstellung der Rumpfsektion erfolgt bei einem bevorzugten Ausführungsbeispiel mittels einer Prepreg- oder Harzinfusionstechnologie in Wickel- oder Auflegetechnik. Verwendung können hierbei neben Kohlenstoffverbundwerkstoffen auch Glas- oder Aramidfaserverbundwerkstoffe finden. Bei einer Herstellung im Wickelverfahren, beispielsweise mittels Horizontalwickeln, kann die etwa mittig in der Kalotte vorgesehene Öffnung für den Wickeldorn nach dem Wickeln mittels einer Dopplerlasche verschlossen werden.

Entsprechend dem Lastverlauf können ferner Verstärkungen vorgesehen sein. Diese können als Aufdickungen oder aufgesetzte Profile ausgebildet werden. Als Profilteile zur Verstärkung sind insbesondere Stringer und/oder Spante einsetzbar.

Als besonders vorteilhaft hat es sich erwiesen, wenn die Rumpfschalenstruktur und das Druckschott in einer gemeinsamen, ein- oder mehrteiligen Werkzeugform herstellbar sind. Erfindungsgemäß wird es bevorzugt, wenn die gesamte Baueinheit in einem Arbeitsgang in einem Autoklaven ausgehärtet wird.

Die erfindungsgemäße Rumpfschale für ein Flugzeug weist zumindest eine Rumpfsektion auf, bei welcher das Druckschott einstückig mit der Rumpfschalenstruktur ausgebildet ist. Das Druckschott dient beispielsweise als heckseitiger Abschluss eines druckbelüfteten Bereiches eines Flugzeugrumpfes.

Gemäß einem besonders bevorzugten Ausführungsbeispiel einer Rumpfschale bildet eine Außenumfangsfläche der Rumpfsektion eine gemeinsame Außenfläche mit einer Umfangsfläche einer heckseitig an der Rumpfsektion angeordneten hinteren Rumpfsektion aus.

Die hintere Rumpfsektion ist in einem Randbereich mit mehreren toleranzkompensierenden Ausklinkung versehen. Die Ausklinkungen sind zumindest abschnittsweise von einem Dopplerblech begrenzt sein. Dadurch kann eine nochmals verbesserte Bauteilfestigkeit und Ausfallsicherheit erreicht werden.

Sonstige vorteilhafte Weiterbildungen der Erfindung sind Bestandteil der weiteren Unteransprüche.

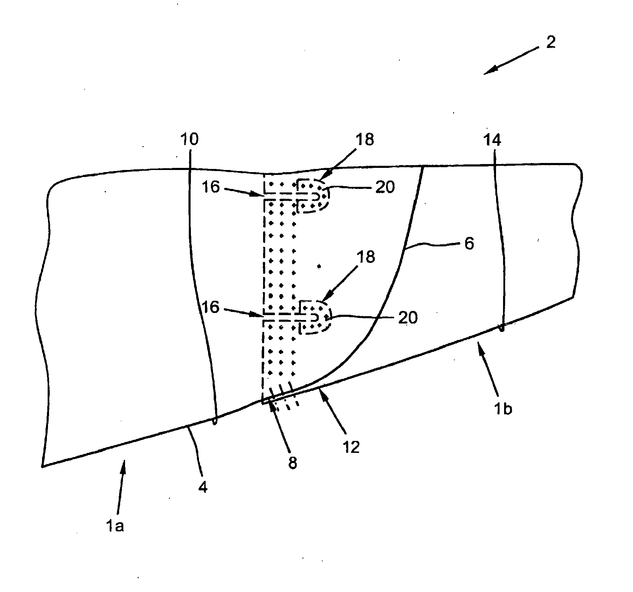

Nachstehend wird die Erfindung anhand eines bevorzugten Ausführungsbeispiels näher erläutert. Die einzige Figur zeigt eine Schnittdarstellung einer erfindungsgemäßen Rumpfschale im Bereich eines hinteren Druckschotts.

Die Figur zeigt einen Ausschnitt einer aus mehreren Rumpfsektionen 1 a, 1 b ausgebildeten Rumpfschale 2 für den Druckrumpf eines Flugzeuges mit einem etwa konisch zusammenlaufenden Heckabschnitt. Die erfindungsgemäße Rumpfsektion 1a weist eine Rumpfschalenstruktur 4 und ein Druckschott 6 aus einem Faserverbundwerkstoff auf, wobei das Druckschott 6 einstückig mit der Rumpfschalenstruktur 4 ausgebildet ist. Das etwa kalottenförmige Druckschott 6 (Druckkalotte) ist in Richtung des Rumpfhecks konvex gewölbt und bildet einen heckseitigen Abschluss eines druckbelüfteten Bereiches des Flugzeugrumpfes aus. Der Übergangsbereich von der Rumpfschalenstruktur 4 zu dem Druckschott 6 verläuft stetig ohne einen den Faserverlauf störenden, scharfkantigen Knick und ist relativ flach ausgebildet, so dass ungünstige rechte Winkel im Faserverlauf vermieden werden. Aufgrund des integral mit der Rumpfsektion 1a ausgebildeten Druckschotts 6 wird eine gewichtsoptimierte Struktur hoher Festigkeit bei wesentlich verringertem fertigungstechnischem Aufwand erreicht. Die Faserverbundwerkstoffstruktur ist entsprechend dem Lastverlauf der Rumpfsektion-/Druckschottanordnung ausgebildet. Insbesondere weist die Rumpfsektion 1a einen lastabhängigen Dickenverlauf auf, so dass ein weiter verringertes Strukturgewicht bei hoher statischer und dynamischer Festigkeit erreicht wird. Hierbei kann eine Hybridbauweise aus unterschiedlichen Materialien oder eine Bauweise aus gleichen Materialien verwendet werden, wobei die Rumpfschalenstruktur 4 eine hohe Steifigkeit aufweist und der Bereich des Druckschotts 6 bei dem dargestellten Ausführungsbeispiel der Erfindung als dünne, elastische Membran ausgebildet ist. Durch die Verwendung schwer entflammbarer oder schwer brennbarer Materialien kann das Druckschott 6 ferner als Brandspant bzw. Brandschottspant eingesetzt werden. Die dargestellte Rumpfsektion 1a mit integriertem Druckschott 6 wurde mittels einer Prepregtechnologie in Auflegetechnik in einer gemeinsamen Werkzeugform hergestellt und in einem Autoklaven ausgehärtet. Zur Verstärkung der Rumpfschalenstruktur sind nicht dargestellte Profilteile wie Stringer und Spante auf der Innenseite der Sektionen 1 a, 1 b in Abhängigkeit der jeweiligen Last ortsabhängig vorgesehen.

Die vordere Rumpfsektion 1a ist mit einem Anschlussbereich 8 für die heckseitige, hintere Rumpfsektion 1 b versehen. Der Anschlussbereich 8 hat einen etwa stufenförmig verringerten Durchmesser, wobei eine Außenumfangsfläche 10 der vorderen Rumpfsektion 1a eine gemeinsame Außenfläche 12 mit einer Umfangsfläche 14 der heckseitig an der Rumpfsektion 1a angeordneten hinteren Rumpfsektion 1b bildet. Die hintere Rumpfsektion 1 b ist in einem Randbereich mit toleranzkompensierenden, etwa schlitzförmigen Ausklinkungen 16 versehen, die sich in Richtung der Flugzeuglängsachse erstrecken. Die Ausklinkungen 16 sind in einem Eckbereich 18 jeweils von einem innenseitig mittels einer Nietverbindung an der hinteren Rumpfsektion 1b befestigten Dopplerblech 20 begrenzt, das die Festigkeit in diesem Bereich erhöht und als Rissstopper dient. Die beiden Rumpfsektionen 1 a, 1b sind im Anschlussbereich 8 über eine genietete Überlappungsverbindung zu der Rumpfschale 2 des Flugzeugrumpfes verbunden, wobei die hintere Rumpfsektion 1 b die vordere Rumpfsektion 1 a in dem Anschlussbereich 8 umgreift.

Die erfindungsgemäße Rumpfschale 2 ist nicht auf die beschriebene Nietverbindung der Sektionen 1 a, 1 b beschränkt, vielmehr können unterschiedliche aus dem allgemeinen Stand der Technik bekannte Fügeverfahren, wie das insbesondere ein Klebeverfahren, Verwendung finden.

Offenbart ist eine Rumpfsektion 1 a für den Druckrumpf eines Flugzeuges, mit einer Rumpfschalenstruktur 4 und zumindest einem Druckschott 6 aus einem Faserverbundwerkstoff, wobei das Druckschott 6 einstückig mit der Rumpfschalenstruktur 4 ausgebildet ist. Weiterhin offenbart ist eine Rumpfschale 2 mit zumindest einer derartigen Rumpfsektion 1a.

### Bezugszeichenliste

- 1: Rumpfsektion
- 2: Rumpfschale
- 4: Rumpfschalenstruktur
- 6: Druckschott
- 8: Anschlussbereich
- 10: Außenumfangsfläche
- 12: Außenfläche
- 14: Umfangsfläche
- 16: Ausklinkung
- 18: Eckbereich
- 20: Dopplerblech

## Patentansprüche

1. Rumpfschale für ein Flugzeug;
mit einer vorderen Rumpfsektion (1a), welche zumindest ein Druckschott (6) und eine Rumpfschalenstruktur (4) aus einem Faserverbundwerkstoff aufweist, wobei das Druckschott (6) einstückig mit der Rumpfschalenstruktur (4) ausgebildet ist; und
mit einer hinteren Rumpfsektion (1b), welche heckseitig an der vorderen Rumpfsektion (1a) angeordnet ist, wobei die hintere Rumpfsektion (1b) einen Randbereich mit zumindest einer toleranzkompensierenden Ausklinkung (16) aufweist, wobei die Ausklinkung (16) zumindest abschnittsweise von mindestens einem Dopplerblech (20) begrenzt ist.

2. Rumpfschale nach Anspruch 1, **dadurch gekennzeichnet, dass** eine Außenumfangsfläche (10) der vorderen Rumpfsektion (1a) eine gemeinsame Außenfläche (12) mit einer Umfangsfläche (14) der hinteren Rumpfsektion (1b) bildet.

3. Rumpfschale nach einem der vorhergehenden Ansprüche, **dadurch gekennzeichnet, dass** ein Übergangsbereich von der Rumpfschalenstruktur (4) zu dem Druckschott (6) stetig ausgebildet ist.

4. Rumpfschale nach einem der vorhergehenden Ansprüche, **dadurch gekennzeichnet, dass** die vordere Rumpfsektion (1a) einen Anschlussbereich (8) mit einem verringerten Durchmesser für die hintere Rumpfsektion (1b) aufweist.

5. Rumpfschale nach einem der vorhergehenden Ansprüche, **dadurch gekennzeichnet, dass** das Druckschott (6) eine Kalottenform, Ellipsenform oder Ovalform aufweist.

6. Rumpfschale nach einem der vorhergehenden Ansprüche, **dadurch gekennzeichnet, dass** die vordere Rumpfsektion (1a) einen lastabhängigen Dickenverlauf aufweist.

7. Rumpfschale nach einem der vorhergehenden Ansprüche, **dadurch gekennzeichnet, dass** die vordere Rumpfsektion (1a) eine Hybridbauweise aus unterschiedlichen Materialien oder eine Bauweise aus gleichen Materialien aufweist, wobei die Rumpfschalenstruktur (4) eine hohe Steifigkeit aufweist und das Druckschott (6) als dünne Membran ausgebildet ist.

8. Rumpfschale nach einem der vorhergehenden Ansprüche, **dadurch gekennzeichnet, dass** die Rumpfschalenstruktur (4) und das Druckschott (6) in einer gemeinsamen, ein- oder mehrteiligen Werkzeugform herstellbar sind.

9. Rumpfschale nach einem der vorhergehenden Ansprüche, **dadurch gekennzeichnet, dass** an der vorderen Rumpfsektion (1a) Profilteile, wie insbesondere Stringer und/oder Spante, zur Verstärkung vorgesehen sind.

10. Rumpfschale nach einem der vorhergehenden Ansprüche, **dadurch gekennzeichnet, dass** das Druckschott (6) einen heckseitigen Abschluss eines druckbelüfteten Bereiches eines Flugzeugrumpfes ausbildet.

## Claims

1. Fuselage for an aeroplane;
having a front fuselage portion (1a), which comprises at least a pressure bulkhead (6) and a fuselage shell construction (4) made of a fibre composite material, the pressure bulkhead (6) being formed integrally with the fuselage shell construction (4); and
having a rear fuselage portion (1b), which is arranged on the tail side of the front fuselage portion (1a), the rear fuselage portion (1b) comprising an edge region having at least one tolerance compensation notch (16), the notch (16) being defined at least in portions by at least one doubler plate (20).

2. Fuselage shell according to claim 1, **characterised in that** an external peripheral face (10) of the front fuselage portion (1a) forms a shared outer face (12) with a peripheral face (14) of the rear fuselage portion (1b).

3. Fuselage shell according to either of the preceding claims, **characterised in that** a transition region is formed continuously from the fuselage shell construction (4) to the pressure bulkhead (6).

4. Fuselage shell according to any one of the preceding claims, **characterised in that** the front fuselage portion (1a) comprises a connection region (8) having a smaller diameter for the rear fuselage portion (1b).

5. Fuselage shell according to any one of the preceding claims, **characterised in that** the pressure bulkhead (6) is of a dome shape, an ellipse shape or an oval shape.

6. Fuselage shell according to any one of the preceding claims, **characterised in that** the front fuselage portion (1a) has a load-dependent thickness progression.

7. Fuselage shell according to any one of the preceding claims, **characterised in that** the front fuselage potion (1a) is of a hybrid construction consisting of various materials or a construction consisting of the same materials, the fuselage shell structure (4) being of a high rigidity and the pressure bulkhead (6) being in the form of a thin membrane.

8. Fuselage shell according to any one of the preceding claims, **characterised in that** the fuselage shell structure (4) and the pressure bulkhead (6) can be produced in a shared single-part or multi-part mould.

9. Fuselage shell according to any one of the preceding claims, **characterised in that** profiled parts, such as in particular stringers and/or formers, are provided on the front fuselage portion (1a) for reinforcement.

10. Fuselage shell according to any one of the preceding claims, **characterised in that** the pressure bulkhead (6) comprises a tail-side termination of a pressure-ventilated region of an aeroplane fuselage.

## Revendications

1. Coque de fuselage pour un aéronef ;
comportant une section de fuselage avant (1a), qui présente au moins une cloison de pression (6) et une structure de fuselage en coque (4) constituées d'un matériau renforcé de fibres, la cloison de pression (6) étant réalisée d'une seule pièce avec la structure de fuselage en coque (4) ; et
comportant une section de fuselage arrière (1b), qui est disposée à l'arrière de la section de fuselage avant (1a), la section arrière (1b) présentant une zone marginale avec au moins une encoche (16) à compensation de tolérance, l'encoche (16) étant limitée au moins par endroits par au moins une double tôle (20).

2. Coque de fuselage selon la revendication 1, **caractérisée par le fait qu'**une surface périphérique externe (10) de la section de fuselage avant (1a) forme une surface externe (12) commune avec une surface périphérique (14) de la section de fuselage arrière (1b).

3. Coque de fuselage selon l'une des revendications précédentes, **caractérisée par le fait qu'**une zone de jonction est formée de manière constante de la structure de fuselage en coque (4) à la cloison de pression (6).

4. Coque de fuselage selon l'une des revendications précédentes, **caractérisée par le fait que** la section avant (1a) présente une zone terminale (8) avec un diamètre réduit pour la section de fuselage arrière (1b).

5. Coque de fuselage selon l'une des revendications précédentes, **caractérisée par le fait que** la cloison de pression (6) présente une forme de calotte, ou une forme elliptique ou ovale.

6. Coque de fuselage selon l'une des revendications précédentes, **caractérisée par le fait que** la section de fuselage avant (1a) présente un profil d'épaisseur dépendant de la charge.

7. Coque de fuselage selon l'une des revendications précédentes, **caractérisée par le fait que** la section de fuselage avant (1a) présente une construction hybride constituée de matériaux différents ou une construction constituée de matériaux identiques, la structure de fuselage en coque (4) présentant une forte rigidité et la cloison de pression (6) étant formée d'une fine membrane.

8. Coque de fuselage selon l'une des revendications précédentes, **caractérisée par le fait que** la structure de fuselage en coque (4) et la cloison de pression (6) peuvent être fabriquées dans un moule commun en une ou plusieurs parties.

9. Coque de fuselage selon l'une des revendications précédentes, **caractérisée par le fait que** des pièces profilées, comme en particulier des raidisseurs et/ou des couples, sont prévues pour le renforcement sur la section de fuselage avant (1a).

10. Coque de fuselage selon l'une des revendications précédentes, **caractérisée par le fait que** la cloison de pression (6) forme une terminaison arrière d'une zone ventilée sous pression d'un fuselage d'aéronef.
